# EUROPÄISCHE PATENTSCHRIFT

(11) **EP 3 170 438 B1**
(45) Veröffentlichungstag und Bekanntmachung des Hinweises auf die Patenterteilung: **08.07.2020**
(21) Anmeldenummer: 16196146.1
(22) Anmeldetag: 28.10.2016
(51) Int. Cl.: A47L 15/42, A47L 15/48

(54) **GESCHIRRSPÜLMASCHINE MIT EINER WÄRMEPUMPE**
DISHWASHER WITH A HEAT PUMP
LAVE-VAISSELLE COMPRENANT UNE POMPE À CHALEUR

(30) Priorität: 20.11.2015 DE 102015222940
(43) Veröffentlichungstag der Anmeldung: 24.05.2017
(73) Patentinhaber: BSH Hausgeräte GmbH, 81739 München (DE)
(72) Erfinder: Riedinger, Jochen, 89407 Dillingen (DE); Heinle, Martin, 89353 Glött (DE); Paintner, Kai, 86465 Welden (DE)

(56) Entgegenhaltungen:
- EP-A1- 2 064 982
- EP-A2- 2 443 984
- WO-A1-2014/198300
- DE-A1-102011 006 669
- JP-A- 2007 125 198

## Beschreibung

Die vorliegende Erfindung betrifft eine Geschirrspülmaschine mit einem Spülbehälter für Spülgut und mit einer Wärmepumpe, die zumindest eine Kondensatoreinrichtung zur Kondensation eines im Betrieb umlaufenden Wärmetransportmediums umfasst.

Aus verschiedenen Ausführungen ist für Geschirrspülmaschinen eine solche Wärmepumpe bekannt, die einen Kondensator umfasst, der eine Rohr-in-Rohr-Ausbildung zeigt. Dabei ist ein Innenrohr als Kupferrohr ausgebildet und in einem äußeren Kunststoffrohr geführt. Die Spülflotte wird durch den Zwischenraum zwischen innerem und äußerem Rohr geführt und kann dabei Wärme aus dem inneren Rohr aufnehmen, durch das in einem geschlossenen Kreislauf Wärmetransportmedium der Wärmepumpe umgepumpt wird. Nachteilig ist dabei die relativ große Länge, die für diese Art der Wasserheizung benötigt wird. Dadurch ist der Raumbedarf für den Kondensator groß, und es wird problematisch, diesen in der Geschirrspülmaschine einzubauen, ohne den Raum im Spülbehälter einzuschränken. Insbesondere stellt sich häufig die Notwendigkeit einer Vergrößerung des unter dem Spülbehälter liegenden Sockels; dies sollte im Interesse einer hohen Aufnahmekapazität für Spülgut jedoch vermieden werden.

Die Geschirrspülmaschine der JP 2007 125198 A weist ein Wärmepumpensystem mit einem Kompressor, mit einem Druckminderer, mit einem Kondensor bzw. Verflüssiger, sowie mit einem Verdampfer auf. Dabei ist der Verflüssiger innerhalb der Waschkammer des Spülbehälters der Geschirrspülmaschine im Bodenbereich der Waschkammer angeordnet. Im Deckenbereich ist in der ersten senkrechten Seitenwand des Spülbehälters ein Luftauslass vorgesehen, von dem aus ein außerhalb des Spülbehälters angeordneter Luftkanal zu einem tiefer liegenden Lufteinlass führt, der in der gegenüberliegenden zweiten senkrechten Seitenwand des Spülbehälters vorgesehen ist. Der Lufteinlass befindet sich dabei oberhalb des Kondensors und oberhalb des im Spülbetrieb vorhandenen Flüssigkeitspegels etwa auf der Höhe der Unterkante eines im Spülbehälter untergebrachten Geschirrkorbs und ist damit abgewandt_vom Kondensor. Im Luftkanal ist ein Gebläse bzw. Lüfter vorhanden. Im Lüfterbetrieb wird die Luft in Richtung des Geschirrkorbs auf den im Deckenbereich vorhandenen Luftauslass zu nach oben geblasen, d.h. in eine vom Kondensor weggerichtete bzw. entgegengesetzte Richtung.

Der Erfindung liegt das Problem zugrunde, eine insbesondere raumsparende und dennoch effektive Lösung für die Gestaltung einer Wärmepumpe in einer Geschirrspülmaschine zu schaffen.

Die Erfindung löst das Problem durch eine Geschirrspülmaschine mit den Merkmalen des Anspruchs 1. Hinsichtlich weiterer vorteilhafter Ausgestaltungen und Merkmale der Erfindung wird auf die Ansprüche 2 bis 14 verwiesen.

Dadurch, dass bei der erfindungsgemäßen Geschirrspülmaschine mit zumindest einer Wärmepumpe, die zumindest eine Kondensatoreinrichtung zur Kondensation eines im Betrieb umlaufenden Wärmetransportmediums umfasst, die zumindest eine Kondensatoreinrichtung im Spülbehälter gelegen ist, ist eine Lösung geschaffen, die Energieeffizienz zu verbessern. Der Kondensator kann sowohl Spülwasser erwärmen als auch bei Beaufschlagung mit Luft diese erwärmen und so auch in einem Trocknungsschritt des Spülprogramms effektiv arbeiten. Der Spülbehälter muss in seinem Volumen nicht verkleinert werden.

Wenn vorteilhaft die Kondensatoreinrichtung einen Rohrkondensator ausbildet, kann diese raumsparend und offen im Spülbehälter verlegt sein und eine große Austauschfläche mit der umgebenden Luft oder Spülwasser bilden.

Für eine hohe Effizienz bei der Wärmeübertragung ist es insbesondere günstig, wenn die Rohrabschnitte der Kondensatoreinrichtung als ein oder mehrere Bögen, als Mäander oder als andere eine zumindest nahezu horizontale Fläche aufspannendes Muster oberhalb eines Bodens des Spülbehälters verlegt ist. Dann kann ein intensiver und großflächiger Austausch mit beaufschlagender Luft oder Wasser im Spülbehälter erfolgen.

Sofern die zumindest nahezu horizontal gelegenen Rohrabschnitte keinen unmittelbaren Kontakt zum Boden des Spülbehälters haben, ist eine Wärmeübertragung auf diesen und die darunter liegenden Bauteile weitgehend vermieden. Zudem bietet eine so offene Rohrverlegung die Möglichkeit der Umspülung insbesondere auch mit Luft von allen Seiten.

Hierfür sind die Rohrabschnitte der Kondensatoreinrichtung vorteilhaft in einem Abstand von zwei bis acht Zentimetern oberhalb des Bodens gehalten.

Besonders günstig sind die Rohrabschnitte bei Öffnung der Geschirrspülmaschine und ggf. Vorziehen eines unteren Geschirrkorbs von außen sichtbar, so dass für die Kunden klar die technische Lösung zu erkennen ist. Dabei können die Rohrabschnitte über am Boden befindliche Abstandhalter gegenüber dem Boden abgestützt sein.

Wenn die Rohrabschnitte von im Spülbehälter umlaufbarer Flüssigkeit zumindest phasenweise beaufschlagbar sind, zum Beispiel in einer Reinigungsphase, kann die Flüssigkeit dadurch aufgeheizt werden, um dadurch die für die Reinigungsphase benötigte Wassertemperatur zu erreichen. Eine weitere Heizung für das Spülwasser kann dann entbehrlich sein.

Eine Beaufschlagung der Rohrabschnitte mit Flüssigkeit kann zum Beispiel über Düsen der rotierenden Sprüharme vorgesehen sein, zusätzlich oder alternativ können eigene Austrittsdüsen im Spülbehälter vorgesehen sein, die auf die Rohrabschnitte gerichtet sind und damit eine effektive Wasserbeaufschlagung des Kondensators sicherstellen.

Erfindungsgemäß kann zur Sicherstellung einer Wärmeübertragung von der im Spülbehälter angeordneten Kondensatoreinrichtung bzw. Verflüssigereinrichtung auf die Luft im Spülbehälter und/oder dort zu trocknendes Spülgut in einer Trocknungsphase eines Geschirspülprogramms zumindest eine der Kondensatoreinrichtung, insbesondere deren Rohrabschnitten, zugewandte Luftaustrittsöffnung im Spülbehälter vorgesehen sein, um so die Kondensatoreinrichtung, insbesondere deren Rohrabschnitte, in der Trocknungsphase mit Luft aus der Luftaustrittsöffnung kühlen zu können.

Günstig ist dabei die Luftaustrittsöffnung von einer vor Wassereintritt schützenden Kappe übergriffen und befindet sich in einem von der Vorderseite abgewandten hinteren Bereich des Spülbehälters, zum Beispiel in der hinteren rechten Ecke in einem Bereich, der nicht von einem Sprüharm überstrichen wird.

Für die Bereitstellung eines großen Luftstroms ist vorteilhaft der Luftaustrittsöffnung ein Gebläse vorgeordnet. Insbesondere kann der Luftaustrittsöffnung ein Luftführungssystem vorgeordnet sein, in dem ein lufttrocknendes Material, insbesondere Zeolith, enthalten ist.

Zudem ist es zur Komplettierung der Wärmepumpe bei kompakter Bauform günstig, wenn die Wärmepumpe zusätzlich eine Verdampfereinrichtung umfasst, die im wesentlichen außerhalb von einer oder zwei Seitenwandungen des Spülbehälters angeordnet ist oder sind.

Weitere Vorteile und Merkmale ergeben sich aus in der Zeichnung dargestellten und nachfolgend beschriebenen Ausführungsbeispielen des Gegenstandes der Erfindung.

In der Zeichnung zeigt:
- Fig. 1: eine schematische perspektivische Ansicht von schräg vorne einer Ausführungsform einer Geschirrspülmaschine mit einer hier vorderseitigen Tür,
- Fig. 2: einen Blick von schräg oben, gesehen von der Vorderseite, in Richtung des Bodens des Spülbehälters und eines darin oberhalb des Bodens angeordneten Rohrkondensators,
- Fig. 3: eine schematische Ansicht von oben auf den Boden des Spülbehälters und auf geschnitten dargestellte Seitenteile, in denen Verdampferrohre der Wärmepumpe verlaufen, wobei hier die Verlegung des Rohrkondensators abweichend zu Figur 2 in mäandrierender Form erfolgt ist,
- Fig. 4: einen beispielhaften Temperaturverlauf in der Geschirrspülmaschine über die Zeit,
- Fig. 5: eine Darstellung der energetischen Berechnung im zeitlichen Verlauf über den Spülgang, ähnlich wie in Figur 4.

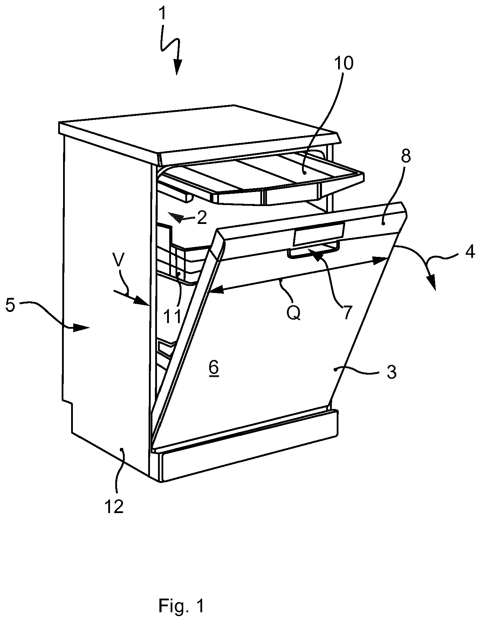

Die in Figur 1 schematisch dargestellte Geschirrspülmaschine 1 ist eine Haushaltsgeschirrspülmaschine und weist als Bestandteil eines Korpus' 5 einen Spülbehälter 2 zur Aufnahme von zu bearbeitendem Spülgut wie Geschirr, Töpfen, Bestecken, Gläsern, Kochutensilien u. ä. auf. Das Spülgut kann dabei zum Beispiel in Geschirrkörben 11 und/oder einer Besteckschublade 10 halterbar und dabei von Spülflotte beaufschlagbar sein. Der Spülbehälter 2 kann einen zumindest im wesentlichen rechteckigen Grundriß mit einer in Betriebsstellung einem Benutzer zugewandten Vorderseite V aufweisen. Diese Vorderseite V kann dabei einen Teil einer Küchenfront aus nebeneinander stehenden Küchenmöbeln bilden oder bei einem allein stehenden Gerät auch ohne Bezug zu weiteren Möbeln sein.

Der Spülbehälter 2 ist insbesondere an dieser Vorderseite V von einer Tür 3 verschließbar. Diese Tür 3 ist in Figur 1 in teilweise geöffneter und dann schräg zur Vertikalen stehenden Stellung gezeigt. In ihrer Schließstellung steht sie hingegen aufrecht und ist gemäß der Zeichnung zu ihrer Öffnung um eine untere Horizontalachse nach vorne und unten in Richtung des Pfeils 4 aufschwenkbar, so daß sie in vollständig geöffneter Stellung zumindest nahezu horizontal liegt.

An ihrer in Schließstellung vertikalen, dem Benutzer zugewandten Außen- und Vorderseite V kann die Tür 3 mit einer Dekorplatte 6 versehen sein, um damit eine optische und/oder haptische Aufwertung und/oder eine Anpassung an umliegende Küchenmöbel zu erfahren.

Der Geschirrspülmaschine 1 ist hier als allein stehendes oder als sog. teilintegriertes oder auch als voll integriertes Gerät ausgebildet. Im letztgenannten Fall kann der Korpus 5 auch im wesentlichen mit den Außenwandungen des Spülbehälters 2 abschließen. Ein diesen außen umgebendes Gehäuse kann dann entbehrlich sein.

Der beweglichen Tür 3 ist im Ausführungsbeispiel gemäß der Zeichnung in ihrem oberen Bereich eine in Querrichtung Q der Geschirrspülmaschine 1 erstreckte Bedienblende 8 zugeordnet, die eine von der Vorderseite V zugängliche Eingriffsöffnung 7 zum manuellen Öffnen und/oder Schließen der Tür 3 umfassen kann. In Querrichtung Q hat die Geschirrspülmaschine häufig eine Erstreckung von 50 oder 60 Zentimetern. In Tiefenrichtung von der Vorderseite V nach hinten liegt die Erstreckung häufig ebenfalls bei etwa 60 Zentimetern. Die Werte sind nicht zwingend.

Des weiteren ist die Geschirrspülmaschine 1 hier mit zumindest einer Wärmepumpe versehen, die zumindest eine Kondensatoreinrichtung 13 zur Kondensation eines im Betrieb umlaufenden Wärmetransportmediums der Wärmepumpe umfasst, wobei diese zumindest eine Kondensatoreinrichtung 13 im Spülbehälter 2 gelegen ist. Der Sockel 12 der Geschirrspülmaschine 1 muss dadurch nicht vergrößert werden.

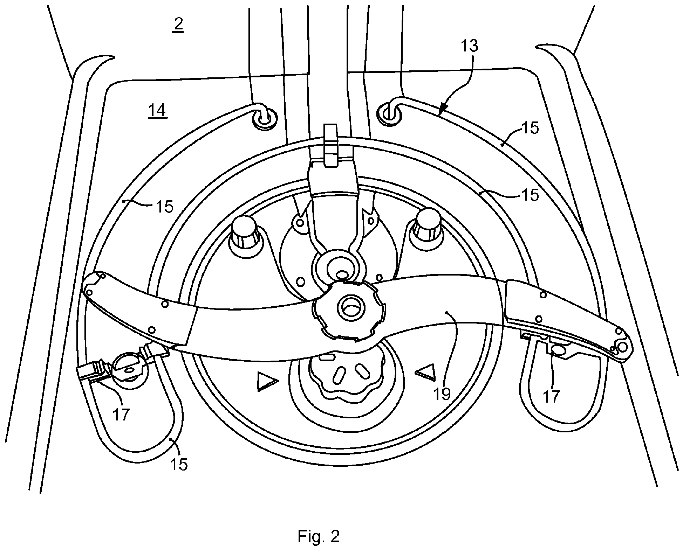

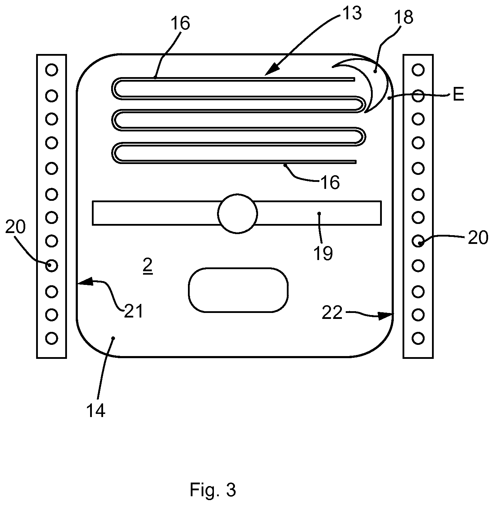

Gemäß der Zeichnung bildet die Kondensatoreinrichtung 13 hier einen Rohrkondensator aus, dessen Rohrabschnitte 15, 16 als ein oder mehrere Bögen, als Mäander oder als andere eine zumindest nahezu horizontale Fläche aufspannendes Muster oberhalb eines Bodens 14 des Spülbehälters 2 verlegt ist. In der Darstellung nach Figur 2 ist ein im wesentlichen halbkreisbogenförmig verlaufender Doppel-Bogen der Rohrabschnitte 15 der Kondensatoreinrichtung gezeichnet, die sich zwischen einem als Rohrdurchführung ausgebildeten Einlass in den Spülbehälter 2 zunächst ungefähr viertelkreisförmig in der Horizontalen in Richtung zur Vorderseite V erstreckt, dann in einem Bogen um 180° wendet und halbkreisförmig zurück und wieder nach vorne läuft, wieder in einem Bogen um 180° wendet und anschließend viertelkreisförmig zum Auslass (Rohrdurchführung) aus dem Spülbehälter 2 läuft. In der Darstellung nach Figur 3 ist alternativ ein mäandrierender Verlauf der Rohrabschnitte 16 mit mehreren Windungen angedeutet. Die im Spülbehälter 2 verlaufende Länge des Rohrkondensators 13 kann dadurch je nach Anzahl der Windungen variieren. Auch andere Verläufe der Rohre des Kondensators 13 als die in den Figuren 2 und 3 gezeigten sind möglich.

In beiden Fällen weisen die zumindest nahezu horizontal über dem Boden 14 gelegenen Rohrabschnitte 15, 16 des Kondensators 13 keinen unmittelbaren Kontakt zum Boden 14 des Spülbehälters 2 auf, sondern sind in einem Vertikalabstand von zwei bis acht Zentimetern oberhalb des Bodens 14 gehalten. Hierfür sind die Rohrabschnitte 15, 16 auf über am Boden 14 befindliche Abstandhalter 17 gegenüber dem Boden 14 abgestützt und darüber unbeweglich gehalten.

Ebenso sind in beiden Fällen oder auch bei einem noch anderen Verlaufsmuster die Rohrabschnitte 15, 16 des Rohrkondensators 13 bei Öffnung der Geschirrspülmaschine 1 und ggf. Vorziehen eines unteren Geschirrkorbs 11 von außen sichtbar. Damit ist auch eine Sichtkontrolle, zum Beispiel bezüglich einer möglichen Verschmutzung, durch den Kunden jederzeit möglich.

Insbesondere zur Aufheizung von Spülwasser sind die Rohrabschnitte 15, 16 von im Spülbehälter 2 umlaufbarer Flüssigkeit zumindest phasenweise beaufschlagbar. Der Kondensator 13 wird dabei wahlweise durch das Spritzwasser der Sprüharme 19 oder durch speziell während der Heizphase angesteuerte und im hinteren Bereich des Bodens 14 angebrachte Sprühdüsen - hier nicht gezeichnet - gekühlt. Dadurch wird die Wärme in den Spülprozess abgeführt. Die Rohrabschnitte 15, 16 sind dabei heiß, so daß die Wärme auf das benetzende Spülwasser übertragen wird. Typischerweise beträgt die Temperatur des Kondensators in dieser Phase zwischen 40°C und 70°C.

Hingegen ist zur Kühlung der Rohrabschnitte 15, 16 in einer Trocknungsphase der Geschirrspülmaschine zumindest eine den Rohrabschnitten 15, 16 des Kondensators 13 zugewandte Luftaustrittsöffnung 18 im Spülbehälter 2 vorgesehen. Diese Luftaustrittsöffnung 18 ist von einer vor Wassereintritt schützenden Kappe übergriffen und befindet sich in einem von der Vorderseite abgewandten hinteren Bereich des Spülbehälters, der vom rotierenden Sprüharm 19 nicht überstrichen wird. Hier ist gemäß der Zeichnung die Luftaustrittsöffnung 18 in der hinteren rechten Ecke E angeordnet.

Dabei ist der Luftaustrittsöffnung 18 ein Gebläse - nicht gezeichnet - vorgeordnet, so dass die Luft mit großem und konstantem Volumenstrom in den Spülbehälter 2 geblasen werden kann. Dadurch wird während der Trocknungsphase der Kondensator 13 einem großen Luftstrom ausgesetzt und von diesem gekühlt. Auf diese Weise ist es möglich, die Luft im Spülbehälter 2 zu erwärmen. Hierzu können größtenteils bestehende Komponenten eines Luftführungssystems verwendet werden, das der Luftaustrittsöffnung 18 vorgeordnet ist, und das insbesondere ein lufttrocknendes Material, insbesondere Zeolith, enthält. Die so eingeblasene Luft ist dann bereits über das beispielsweise Zeolith getrocknet und zeigt so ein großes Vermögen, in der Trocknungsphase erneut Wasser vom Spülgut aufzunehmen, ehe sie wieder durch das Luftführungssystem geleitet und vom Zeolith o. ä. getrocknet wird.

Die Wärmepumpe umfasst zusätzlich eine Verdampfereinrichtung 20, die im wesentlichen außerhalb von einer oder zwei Seitenwandungen 21, 22 des Spülbehälters 2 angeordnet ist oder sind, wie in der Draufsicht nach Figur 3 erkennbar ist. Hier ist der Verdampfer 20 beiden Seiten des Geschirrspülers 1 in mehreren mäandrierenden Rohren zugeordnet. Der Verdampfer 20 ist dabei innerhalb von seitlichen Wassertanks positioniert.

Um auf die während des Spülprogramms unterschiedlichen benötigten Heizleistungen - während der Reinigungsphase Wasser aufheizen und der Trocknungsphase Luft aufheizen - eingehen zu können, ist ein regelbarer Kompressor 23 vorgesehen. Der regelbare Kompressor 23 bietet ebenfalls die Möglichkeit, die Verfahrensparameter (z. B. Temperatur, Volumenströme) konstant zu halten, wodurch das jeweilige System immer in seinem besten Arbeitspunkt arbeiten kann.

In der Trocknungsphase des im Spülbehälter gehaltenen Spülguts kann heiße und feuchte Luft aus dem Spülbehälter 2 in einen extern gelegenen Luftführungsraum angesaugt werden. Dabei kann die Feuchtigkeit aus dieser Luft an einer kalten Fläche abkühlen, ehe die so getrocknete und gekühlte Luft wieder von unten über die Luftaustrittsöffnung 18 in den Spülbehälter zurückgeblasen wird. Dabei wird während der Lufttrocknung ein Wärmetransportmedium aufgeheizt und verdampft, das seine Wärme bei seiner Kondensation im Kondensator 13 wieder zur Vorheizung der Luft abgeben kann, so dass diese als getrocknete und vorgeheizte Luft ein weiteres Mal den Spülbehälter 2 durchlaufen und durch die Vorheizung ein hohes Maß an dort noch vorhandener Feuchtigkeit aufnehmen kann, ehe eine Sättigung eintritt. Es ergibt sich somit eine besonders gründliche und effiziente Trocknung des Spülguts.

In Figur 3 ist ein möglicher Spülprozess im zeitlichen Ablauf in vereinfachter Darstellung. Es ist mit der linken Klammer angedeutet, dass der Kompressor 23 während der Aufheizphase 24 im Reinigen mit voller Leistung läuft, während er in der Trocknungsphase 25 (rechte Klammer) mit reduzierter Leistung betrieben wird. Dann ist auch das Lüftersystem zur Kühlung des Kondensators 23 aktiv. In der Aufheizphase 24 hingegen können wahlweise die genannten Sprühdüsen angesteuert sein.

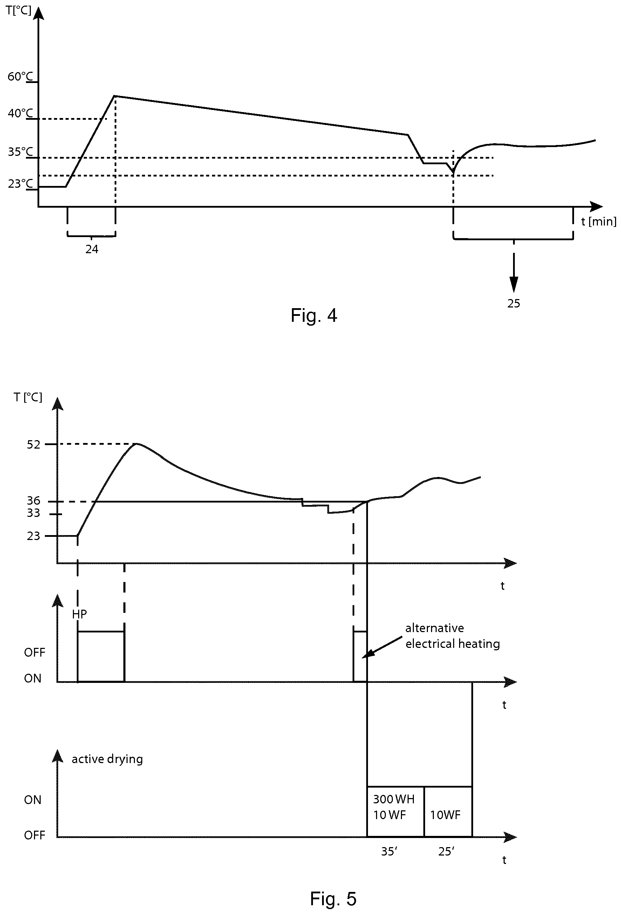

In der energetischen Betrachtung nach Figur 5 wird deutlich, wann überhaupt nur Energie benötigt wird. Dabei lässt sich folgende Abschätzung für den Energiebedarf über einen vollständigen Spülprozess inkl. Trocknung, d.h. einen vollständigen Spülgang aufmachen: Energieverbrauchsberechnung unter folgenden Annahmen ("Energy consumption (based on assumptions)"):
COP=2,5; COP =("coefficient of performance" =Leistungszahl
E_{GV}=15 Wh/K, d.h. es wird von einem thermischen Energiebedarf von 15Wh pro 1° K Temperaturerhöhung von Spülflüssigkeit, Luft und/oder Spülgut in der Geschirrspülmaschine ausgegangen, der sich in etwa mit dem tatsächlichen Energiebedarf einer konventionellen Geschirrspülmaschine deckt.

E_{HP}=(ΔT*E_{GV})/COP, d.h. thermische Energie, die die Wärmepumpe aus einem Wärmeresevoir wie z.B. Wärmespeichertank, insbesondere Wassertank, bereitstellt .

E_{HP}=[(52°C-23°C) + (36°C-33°C)] * K * 15 Wh/K/2,5 = 192 Wh, d.h. elektrische Gesamtenergie, die die Wärmepumpe für den Reinigungsgang zum Erwärmen der Spülflüssigkeit auf 52°C (ausgehend von einer Wassereinlauftemperatur von 23°C) und für den Klarspülgang zum Erwärmen der Spülflüssigkeit auf 36°C (ausgehend von einer Wassereinlauftemperatur von 33°C) benötigt.
E_{active dying}= 184 Wh, d.h. elektrische Energie, die die Wärmepumpe für den Trocknungsgang aufwendet.
Eₚᵤₘₚ= 80 Wh, d.h. elektrische Energie für den Kompressor der Wärmepumpe.

Eₜₒₜₐₗ= 192 Wh + 184 Wh +80 Wh = 456 Wh, d.h. Gesamtbedarf an elektrischer Energie für einen Spülgang.

Dieser Wert liegt 40% unter einer energetischen A+++-Einstufung für Geschirrspülmaschinen. Die energetische Bilanz einer Geschirrspülmaschine mit einer solchen Wärmepumpe, wie hier gezeigt, ist daher außerordentlich günstig.

Mit der hier gezeigten Wärmepumpe kann der gesamte Spülprozess abgedeckt werden. Es ist kein zusätzliches Aufheizen der Klarspülflotte nötig. Energetisch bildet dies einen Idealzustand. Der für die Kunden sichtbar und offen verlaufende Kondensator 13 kann marketingtechnisch herausgestellt werden und ist für eine Wartung gut zugänglich.

### Bezugszeichenliste

- 1: Geschirrspülmaschine,
- 2: Spülbehälter,
- 3: Tür,
- 4: Öffnungsrichtung,
- 5: Korpus,
- 6: Dekorplatte,
- 7: Griffmulde,
- 8: Bedienblende,
- 10: Besteckschublade,
- 11: Geschirrkorb,
- 12: Sockel,
- 13: Kondensatoreinrichtung,
- 14: Boden des Spülbehälters,
- 15: Rohrabschnitte,
- 16: Rohrabschnitte,
- 17: Abstandhalter,
- 18: Luftaustrittsöffnung,
- 19: Sprüharm,
- 20: Verdampfer,
- 21: Seitenwandung,
- 22: Seitenwandung,
- 23: Kompressor,
- 24: Aufheizphase,
- 25: Trocknungsphase,

- Q: Querrichtung,
- E: Ecke des Spülbehälters,
- V: Vorderseite der Geschirrspülmaschine

## Patentansprüche

1. Geschirrspülmaschine (1), insbesondere Haushaltsgeschirrspülmaschine, mit einem Spülbehälter (2) zur Reinigung von Geschirr, Gläsern, Bestecken oder ähnlichem Spülgut und mit zumindest einer Wärmepumpe, die zumindest eine Kondensatoreinrichtung (13) zur Kondensation eines im Betrieb umlaufenden Wärmetransportmediums umfasst, wobei die zumindest eine Kondensatoreinrichtung (13) im Spülbehälter (2) gelegen ist, **dadurch gekennzeichnet, dass** zur Kühlung der Kondensatoreinrichtung (13) in einer Trocknungsphase der Geschirrspülmaschine (1) zumindest eine der Kondensatoreinrichtung (13) zugewandte Luftaustrittsöffnung (18) im Spülbehälter (2) vorgesehen ist, um so die Kondensatoreinrichtung (13) in der Trocknungsphase mit Luft aus der Luftaustrittsöffnung kühlen zu können.

2. Geschirrspülmaschine (1) nach Anspruch 1,
**dadurch gekennzeichnet,**
**dass** die Kondensatoreinrichtung (13) einen Rohrkondensator ausbildet.

3. Geschirrspülmaschine (1) nach Anspruch 2,
**dadurch gekennzeichnet,**
**dass** die Rohrabschnitte der Kondensatoreinrichtung (13) als ein oder mehrere Bögen (15), als Mäander (16) oder als anderes eine zumindest nahezu horizontale Fläche aufspannendes Muster oberhalb eines Bodens (14) des Spülbehälters (2) verlegt sind.

4. Geschirrspülmaschine (1) nach Anspruch 3,
**dadurch gekennzeichnet,**
**dass** die zumindest nahezu horizontal gelegenen Rohrabschnitte (15;16) keinen unmittelbaren Kontakt zum Boden (14) des Spülbehälters (2) haben.

5. Geschirrspülmaschine (1) nach einem der Ansprüche 2 bis 4,
**dadurch gekennzeichnet,**
**dass** die Rohrabschnitte (15;16) der Kondensatoreinrichtung (13) in einem Abstand von zwei bis acht Zentimetern oberhalb des Bodens (14) gehalten sind.

6. Geschirrspülmaschine (1) nach einem der Ansprüche 2 bis 5,
**dadurch gekennzeichnet,**
**dass** die Rohrabschnitte (15;16) bei Öffnung der Geschirrspülmaschine (1) und ggf. Vorziehen eines unteren Geschirrkorbs (11) von außen sichtbar sind.

7. Geschirrspülmaschine (1) nach einem der Ansprüche 5 oder 6,
**dadurch gekennzeichnet,**
**dass** die Rohrabschnitte (15;16) auf über am Boden (14) befindliche Abstandhalter (17) gegenüber dem Boden (14) abgestützt sind.

8. Geschirrspülmaschine (1) nach einem der vorhergehenden Ansprüche,
**dadurch gekennzeichnet,**
**dass** die Rohrabschnitte (15;16) von im Spülbehälter umlaufbarer Flüssigkeit zumindest phasenweise beaufschlagbar sind.

9. Geschirrspülmaschine (1) nach Anspruch 8,
**dadurch gekennzeichnet,**
**dass** zur Beaufschlagung der Rohrabschnitte (15;16) eigene Austrittsdüsen im Spülbehälter (2) vorgesehen sind.

10. Geschirrspülmaschine (1) nach einem der Ansprüche 2 bis 9,
**dadurch gekennzeichnet,**
**dass** zur Kühlung der Rohrabschnitte (15;16) in einer Trocknungsphase der Geschirrspülmaschine (1) die Luftaustrittsöffnung (18) den Rohrabschnitten (15;16) Zugewandt ist.

11. Geschirrspülmaschine (1) nach Anspruch 10,
**dadurch gekennzeichnet,**
**dass** die Luftaustrittsöffnung (18) von einer vor Wassereintritt schützenden Kappe übergriffen ist und sich in einem von der Vorderseite (V) abgewandten hinteren Bereich des Spülbehälters (2) befindet.

12. Geschirrspülmaschine (1) nach einem der Ansprüche 10 oder 11,
**dadurch gekennzeichnet,**
**daß** der Luftaustrittsöffnung (18) ein Gebläse vorgeordnet ist.

13. Geschirrspülmaschine (1) nach einem der Ansprüche 10 bis 12,
**dadurch gekennzeichnet,**
**dass** der Luftaustrittsöffnung (18) ein Luftführungssystem vorgeordnet ist, in dem ein lufttrocknendes Material, insbesondere Zeolith, enthalten ist.

14. Geschirrspülmaschine (1) nach einem der Ansprüche 1 bis 13,
**dadurch gekennzeichnet,**
**dass** die Wärmepumpe zusätzlich zumindest eine Verdampfereinrichtung (20) umfasst, die im wesentlichen außerhalb von einer oder zwei Seitenwandungen (21;22) des Spülbehälters (2) angeordnet ist oder sind.

## Claims

1. Dishwasher (1), in particular household dishwasher, with a dishwasher cavity (2) for the cleaning of dishes, glasses, cutlery or similar items to be washed and with at least one heat pump, which comprises at least one condenser facility (13) for the condensation of a heat transport medium circulating during operation, wherein the at least one condenser facility (13) is located in the dishwasher cavity (2), **characterised in that** for cooling the condenser facility (13) in a drying phase of the dishwasher (1), at least one air outlet opening (18) facing towards the condenser facility (13) is provided in the dishwasher cavity (2), in order to thus be able to cool the condenser facility (13) with air from the air outlet opening during the drying phase.

2. Dishwasher (1) according to claim 1,
**characterised in that**
the condenser facility (13) embodies a pipe condenser.

3. Dishwasher (1) according to claim 2,
**characterised in that**
the pipe sections of the condenser facility (13) are laid as one or more arcs (15), as meanders (16) or as other patterns spanning an at least approximately horizontal area above a base (14) of the dishwasher cavity (2).

4. Dishwasher (1) according to claim 3,
**characterised in that**
the pipe sections (15; 16) laid at least approximately horizontally are not in immediate contact with the base (14) of the dishwasher cavity (2).

5. Dishwasher (1) according to one of claims 2 to 4,
**characterised in that**
the pipe sections (15; 16) of the condenser facility (13) are held at a distance of two to eight centimetres above the base (14).

6. Dishwasher (1) according to one of claims 2 to 5,
**characterised in that**
the pipe sections (15; 16) can be seen from the outside when the dishwasher (1) is opened and possibly when a lower dish rack (11) is pulled forward.

7. Dishwasher (1) according to one of claims 5 or 6,
**characterised in that**
the pipe sections (15; 16) are braced against the base (14) on spacers (17) situated around on the base (14).

8. Dishwasher (1) according to one of the preceding claims,
**characterised in that**
liquid which can circulate in the dishwasher cavity can be applied to the pipe sections (15; 16), at least in phases.

9. Dishwasher (1) according to claim 8,
**characterised in that**
separate outlet nozzles are provided in the dishwasher cavity (2) for application to the pipe sections (15; 16).

10. Dishwasher (1) according to one of claims 2 to 9,
**characterised in that**
for cooling the pipe sections (15; 16), in a drying phase of the dishwasher (1), the air outlet opening (18) faces towards the pipe sections (15; 16).

11. Dishwasher (1) according to claim 10,
**characterised in that**
the air outlet opening (18) is overlapped by a cap which protects against the entry of water and is situated in a rear region of the dishwasher cavity (2) facing away from the front side (V).

12. Dishwasher (1) according to one of claims 10 or 11,
**characterised in that**
a fan is arranged upstream of the air outlet opening (18).

13. Dishwasher (1) according to one of claims 10 to 12,
**characterised in that**
an air guidance system, containing an air-drying material, in particular a zeolite, is arranged upstream of the air outlet opening (18).

14. Dishwasher (1) according to one of claims 1 to 13,
**characterised in that**
the heat pump additionally comprises at least one evaporator facility (20), which is or are arranged substantially outside one or two side walls (21; 22) of the dishwasher cavity (2).

## Revendications

1. Lave-vaisselle (1), notamment lave-vaisselle à usage domestique, comprenant une cuve de lavage (2) pour le nettoyage de vaisselle, verres, couverts ou produits similaires à laver, et comprenant au moins une pompe de chaleur qui comprend au moins un dispositif de condensateur (13) pour la condensation d'un milieu transporteur de chaleur circulant pendant le fonctionnement, l'au moins un dispositif de condensateur (13) étant situé dans la cuve de lavage (2), **caractérisé en ce que** pour le refroidissement du dispositif de condensateur (13) pendant une phase de séchage du lave-vaisselle (1), au moins un orifice de sortie d'air (18) orienté vers le dispositif de condensateur (13) est ménagé dans la cuve de lavage (2) afin de pouvoir ainsi refroidir le dispositif de condensateur (13) pendant la phase de séchage avec de l'air provenant de l'orifice de sortie d'air.

2. Lave-vaisselle (1) selon la revendication 1,
**caractérisé en ce**
**que** le dispositif de condensateur (13) est réalisé comme un condensateur tubulaire.

3. Lave-vaisselle (1) selon la revendication 2,
**caractérisé en ce**
**que** les sections tubulaires du dispositif de condensateur (13) sont posées en tant qu'un ou plusieurs arcs (15), en tant que méandres (16) ou en tant qu'autre modèle comprenant une surface au moins quasi horizontale s'étendant au-dessus d'un fond (14) de la cuve de lavage (2).

4. Lave-vaisselle (1) selon la revendication 3,
**caractérisé en ce**
**que** les sections tubulaires (15 ; 16) situées au moins quasi horizontalement n'ont pas de contact direct avec le fond (14) de la cuve de lavage (2).

5. Lave-vaisselle (1) selon l'une quelconque des revendications 2 à 4,
**caractérisé en ce**
**que** les sections tubulaires (15 ; 16) du dispositif de condensateur (13) sont maintenues avec un écart de deux à huit centimètres au-dessus du fond (14).

6. Lave-vaisselle (1) selon l'une quelconque des revendications 2 à 5,
**caractérisé en ce**
**que** les sections tubulaires (15 ; 16), lorsque le lave-vaisselle (1) est ouvert et lorsqu'un panier à vaisselle inférieur est éventuellement tiré vers l'avant, sont visibles de l'extérieur.

7. Lave-vaisselle (1) selon l'une quelconque des revendications 5 ou 6,
**caractérisé en ce**
**que** les sections tubulaires (15 ; 16) sont soutenues par rapport au fond (14) par l'intermédiaire d'écarteurs (17) se trouvant au fond (14).

8. Lave-vaisselle (1) selon l'une quelconque des revendications précédentes,
**caractérisé en ce**
**que** les sections tubulaires (15 ; 16) peuvent être alimentées au moins par phases par du liquide pouvant être mis en circulation dans la cuve de lavage.

9. Lave-vaisselle (1) selon la revendication 8,
**caractérisé en ce**
**que** pour l'alimentation des sections tubulaires (15 ; 16), de propres buses de sortie sont ménagées dans la cuve de lavage (2).

10. Lave-vaisselle (1) selon l'une quelconque des revendications 2 à 9,
**caractérisé en ce**
**que** pour le refroidissement des sections tubulaires (15 ; 16) pendant une phase de séchage du lave-vaisselle (1), l'orifice de sortie d'air (18) est orienté vers les sections tubulaires (15 ; 16).

11. Lave-vaisselle (1) selon la revendication 10,
**caractérisé en ce**
**que** l'orifice de sortie d'air (18) est entouré par un capuchon protégeant de l'entrée d'eau et se trouve dans une zone arrière, détournée du côté avant (V), de la cuve de lavage (2).

12. Lave-vaisselle (1) selon l'une quelconque des revendications 10 ou 11,
**caractérisé en ce**
**qu'**un ventilateur est disposé en amont de l'orifice de sortie d'air (18).

13. Lave-vaisselle (1) selon l'une quelconque des revendications 10 à 12,
**caractérisé en ce**
**qu'**un système de guidage d'air est disposé en amont de l'orifice de sortie d'air (18), dans lequel système est contenue une matière séchant l'air, notamment de la zéolithe.

14. Lave-vaisselle (1) selon l'une quelconque des revendications 1 à 13,
**caractérisé en ce**
**que** la pompe de chaleur comprend en outre au moins un dispositif d'évaporation (20) qui est disposé ou sont disposés essentiellement en dehors d'une ou de deux parois latérales (21 ; 22) de la cuve de lavage (2).
